# EUROPÄISCHE PATENTANMELDUNG

(11) **EP 1 482 388 A1**
(43) Veröffentlichungstag der Anmeldung: **01.12.2004**
(21) Anmeldenummer: 04011166.8
(22) Anmeldetag: 11.05.2004
(51) Int. Cl.: G05B 23/02

(54) **Elektronisches System mit Sensoren**

(30) Priorität: 27.05.2003 DE 10325374
(71) Anmelder: Valeo Schalter und Sensoren GmbH, 74321 Bietigheim-Bissingen (DE)
(72) Erfinder: Künzler, Frank, 76703 Kraichtal (DE); Biehlmann, Bernd, 71638 Ludwigsburg (DE); Gotzig, Heinrich, 74081 Heilbronn (DE); Hammel, Timo, 74336 Brackenheim (DE)
(74) Vertreter: Hössle Kudlek & Partner

(57) **Zusammenfassung**

Es werden ein elektronisches System (30) mit einer Anzahl von Sensoren (32, 34, 36, 38), ein Sensor (38) zum Einsatz in einem solchen System (30) und ein Verfahren zur Steuerung des elektronischen Systems (30) vorgestellt. Das elektronische System (30) umfaßt eine Anzahl von Sensoren (32, 34, 36, 38), von denen einer als Master-Sensor (38) ausgebildet ist.

## Beschreibung

Die Erfindung betrifft ein elektronisches System mit einer Anzahl von Sensoren und ein Verfahren zur Steuerung eines elektronischen Systems.

Sensorsysteme sind derart ausgebildet, daß mehrere Sensoren an eine ECU (Electronic Control Unit, elektronische Kontrolleinheit) angeschlossen sind. Eine Aufgabe der ECU besteht darin, Informationen der einzelnen Sensoren auszuwerten und die resultierenden Informationen an den Fahrer eines Kraftfahrzeuges oder an andere Systeme des Kraftfahrzeuges zu übergeben. Im einzelnen kann die ECU folgende Funktionen übernehmen: Signalverarbeitung, Kommunikation mit den Sensoren, Ansteuerung der Sensoren, Diagnose innerhalb des Sensorsystems, Speicherung von Daten, Auswertung von Fehlern, Überwachung der Sensoren sowie die Kommunikation mit dem Fahrzeug oder anderen Systemen des Fahrzeuges über eine Schnittstelle. Dabei beinhaltet die ECU entsprechende Komponenten, die es ihr gestatten, derartige Funktionen oder Aufgaben auszuführen. Eine derartige Komponente kann beispielsweise als Microcontroller, digitaler Signalprozessor (DSP), Schnittstellenbaustein, Spannungsversorgung, Filtereinrichtung oder dergleichen ausgebildet sein.

Die ECU stellt innerhalb des Sensorsystems allerdings eine erhebliche Kostenquelle dar. Daraus resultierend stellt sich dem auf dem Gebiet tätigen Fachmann die Aufgabe, diese Kosten zu reduzieren.

Diese Aufgabe wird mit einem elektronischen System mit den Merkmalen des Patentanspruchs 1 sowie einem Verfahren mit den Merkmalen des Patentanspruchs 11 gelöst.

Die Erfindung betrifft ein elektronisches System mit einer Anzahl von Sensoren, bei dem mindestens einer der Sensoren als Master-Sensor ausgebildet ist, der von den anderen Sensoren erfaßte Daten aufnimmt und geeignet weiterverarbeitet. Eine sensorische Funktion erlaubt es den Sensoren Ereignisse oder Einflüsse der Umwelt zu erfassen und aufgrund dessen aussagekräftige Sensorsignale oder -daten bereitzustellen. Der Master-Sensor ist ausgebildet, von den Sensoren erfaßte Daten aufzunehmen und in geeigneter Weise weiterzuverarbeiten oder auszuwerten sowie an eine andere, systemexterne Vorrichtung weiterzuleiten.

Des weiteren kann vorgesehen sein, daß der Master-Sensor von anderen elektronischen Einheiten des elektronischen Systems Daten aufnimmt und geeignet weiterverarbeitet. Eine andere elektronische Einheit kann z.B. ein Aktor sein, der Befehle des Master-Sensors umsetzt.

In bevorzugter Ausführungsform ist der Master-Sensor zur Steuerung von wenigstens einem Sensor ausgebildet. Aufgrund seiner Ausbildung kann der Master-Sensor neben Aufgaben zusätzlich zu einer Detektion von Ereignissen oder Zuständen auch Funktionen der Steuerung, des Datentransfers und/oder der Datenverarbeitung vergleichbar einer ECU übernehmen.

Vorzugsweise ist vorgesehen, daß Kommunikationseinrichtungen zum Austausch von Daten zwischen den Sensoren vorgesehen sind. Diese Kommunikationseinrichtungen können als geeignete Datenleitungen ausgebildet sein. Eine Kommunikation zwischen Sensoren kann auch mittels Funkübertragung bereitgestellt werden. Über Kommunikationseinrichtungen werden Daten, Signale oder verarbeitete Informationen versandt. Der Master-Sensor kann somit Steuerbefehle zur Beeinflussung anderer Sensoren des Systems versenden. Außerdem können Kommunikationseinrichtungen mit systemexternen Vorrichtungen verbunden sein, so daß Daten sowohl von außen empfangen als auch nach außen gesendet werden können.

In weiterer Ausgestaltung der Erfindung ist vorgesehen, daß der Master-Sensor wenigstens eine elektronische Einrichtung zur Informationsverarbeitung aufweist. Diese wenigstens eine elektronische Einrichtung kann als integrierter Microcontroller, digitaler Signalprozessor oder dergleichen ausgebildet sein. Elektronische Einrichtungen, die bislang innerhalb der ECU angeordnet waren, können erfindungsgemäß innerhalb des Master-Sensors angeordnet sein. Die wenigstens eine elektronische Einrichtung des erfindungsgemäßen Master-Sensors kann zur Verarbeitung von Signalen und/oder zur Kommunikation mit der wenigstens einen elektronischen Vorrichtung und/oder zur Ansteuerung der wenigstens einen elektronischen Vorrichtung und/oder zur Diagnose der wenigstens einen elektronischen Vorrichtung und/oder zur Speicherung von Daten und dergleichen ausgebildet sein. Der Master-Sensor ist zur Übernahme übergeordneter Aufgaben gemäß einer ECU vorzugsweise entsprechend mit elektronischen Einrichtungen ausgestattet. Eine derartige elektronische Einrichtung kann ein Microcotroller, Prozessor, bspw. ein digitaler Signalprozessor, sein.

In vorteilhafter Ausgestaltung ist der Master-Sensor als Sensor mit modifizierter Hard- und/oder Software, wie bspw. mit einem leistungsfähigeren Prozessor und/oder einer leistungsfähigeren Spannungsaufbereitungseinrichtung als bei einem herkömmlichen Sensor, ausgestattet. Durch diese Maßnahme kann das Ziel der Erfindung durch Modifikation von Einrichtungen, die ohnehin innerhalb eines Sensors angeordnet sind, erreicht werden. Eine derartige Aufrüstung des Sensors zu einem Master-Sensor ist ohne größeren Aufwand durchführbar.

In bevorzugter Ausführung des elektronischen Systems kann vorgesehen sein, daß der Master-Sensor wenigstens eine Schnittstelle zur Verbindung der wenigstens einen elektronischen Einrichtung mit einer Kommunikationseinrichtung aufweist. Mit dieser Maßnahme wird ein Austausch von Daten, insbesondere von durch den Master-Sensor weiterverarbeiteten Daten, innerhalb des elektronisches Systems ermöglicht.

Der erfindungsgemäßer Sensor übernimmt zentrale und übergeordnete Aufgaben zur Steuerung des erfindungsgemäßen Systems, z. B. die Verarbeitung und/oder Auswertung innerhalb des elektronischen Systems anfallender Signale und Daten. Das elektronische System kann als Sensorsystem ausgebildet sein. Wenigstens ein weiterer Sensor des Sensorsystems übernimmt die Funktion eines Slave-Sensors, der mittels des Master-Sensors steuerbar ist.

Das erfindungsgemäße Sensorsystem kann als mehrkanaliges Verkehrsumfelderkennungssystem ausgebildet sein. Dabei kann ein derartiges elektronisches System als Bestandteil eines Kraftfahrzeugs ausgebildet und bspw. innerhalb eines Stoßfängersystems eines Kraftfahrzeuges angeordnet sein.

Die Erfindung kommt vorzugsweise bei Systemen mit intelligenten Sensoren zur Anwendung. Dies betrifft Sensoren mit integriertem Microcontroller und/oder DSP (digitaler Signalprozessor). Hierbei besteht die Möglichkeit, die innerhalb eines derartigen Sensors vorhandenen Ressourcen effektiver zu nutzen. Die Aufgaben der ECU können somit von dem Master-Sensor übernommen werden. In besonders vorteilhafter Weise bietet sich die Anwendung der Erfindung bei Systemen an, bei denen nur in geringem Umfang Signale und/oder Daten zu verarbeiten sind. In einem solchen Fall ist die ECU durch einen erfindungsgemäßen Master-Sensor in besonders einfacher Weise ersetzbar.

Erfindungsgemäß wird ein Sensor innerhalb des Sensorsystems als Master-Sensor definiert, die anderen Sensoren werden dementsprechend als Slave-Sensoren definiert. Es ist jedoch durchaus denkbar, daß Funktionen der ECU, die aufgrund der erfindungsgemäßen Maßnahmen entbehrlich sind, auf mehrere Sensoren verteilt werden, die dementsprechend mit elektronischen Einrichtungen ausgestattet und/oder modifiziert sind.

Das erfindungsgemäße Verfahren dient zur Steuerung eines elektronischen Systems mit einer Anzahl von Sensoren. Einer der Sensoren ist dabei als sogenannter Master-Sensor ausgebildet und nimmt von den anderen Sensoren erfaßte Daten auf und verarbeitet diese geeignet weiter.

Mit den erfindungsgemäßen Maßnahmen sind eine Reihe von Komponenten, die bislang zur Bereitstellung einer Funktion eines elektronischen Systems nötig waren, einzusparen. Dazu zählt u.a. der Prozessor, die Spannungsversorgung, die Verkabelung, das Gehäuse, die Montage sowie die Leiterplatte der ECU.

Dabei verursachen die etwas stärker bzw. leistungsfähiger ausgelegten Bauteile des erfindungsgemäßen Master-Sensors wesentlich geringere Kosten als die eingesparten Komponenten der ECU. Mit der Erfindung können somit die Kosten für ein Sensorsystem wesentlich reduziert werden. Des weiteren wirkt sich das Nichtvorhandensein der ECU bzw. ihrer Komponenten innerhalb eines Sensorsystems eines Kraftfahrzeuges positiv aus, weil dadurch die Masse des Kraftfahrzeuges reduziert werden kann.

Die Erfindung ermöglicht es, Signale von mehreren Sensoren zu verarbeiten und die resultierende Information an den Fahrer bzw. an andere Systeme des Fahrzeuges weiterzuleiten, ohne wie beim Stand der Technik auf ein externes Steuergerät, insbesondere auf eine ECU, angewiesen zu sein.

Das erfindungsgemäße Konzept kann bei verschiedenen Sensoren (z. B. Radar, Ultraschall, optischen Sensoren und dergleichen) angewandt werden. Bei Sensoren, die mit integrierter Signalverarbeitung und/oder Microcontroller ausgestattet sind, ergibt sich ein erhöhtes Potential zur Kostenreduzierung.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt eine einfache schematische Darstellung eines Sensorsystems gemäß dem Stand der Technik.
- Figur 2: zeigt eine schematische Darstellung einer bevorzugten Ausführungsform eines Sensorsystems mit einer bevorzugten Ausführungsform eines erfindungsgemäßen Master-Sensors.

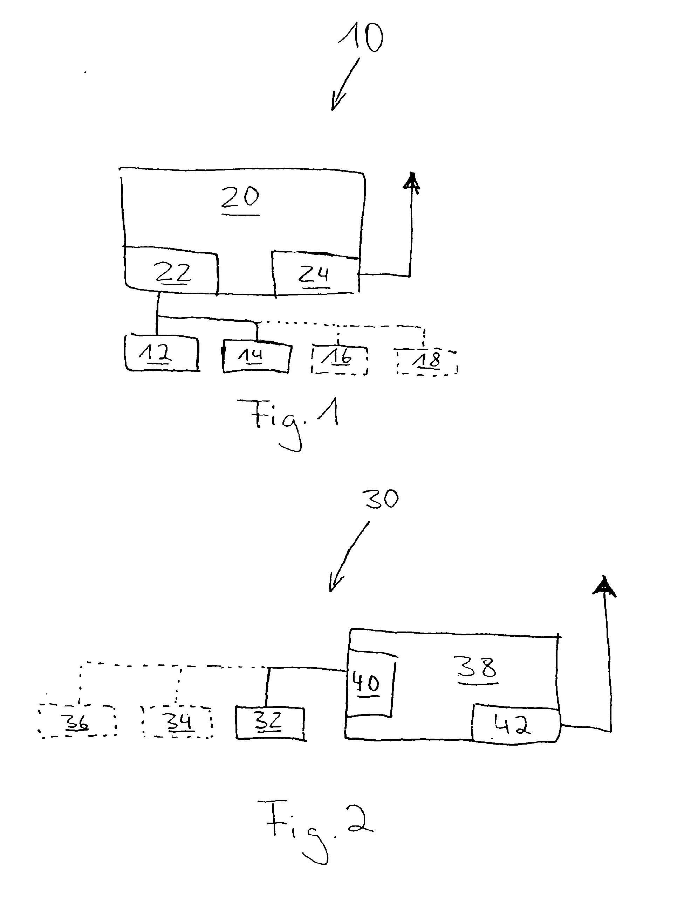

Ein herkömmliches Sensorsystem gemäß dem Stand der Technik ist in der Figur 1 schematisch dargestellt und insgesamt mit 10 bezeichnet. Das Sensorsystem 10 weist wenigstens zwei Sensoren 12, 14 auf, allerdings kann das System 10 durch weitere Sensoren 16, 18 optional erweitert werden.

Zentrale Einrichtung des Sensorsystems 10 gemäß dem Stand der Technik ist eine ECU 20, die einen Kommunikationssensor 22 sowie eine Kommunikationseinrichtung 24 aufweist. Die ECU 20 ist alleinig zur Verarbeitung von Signalen und aus Signalen resultierender Daten ausgebildet. Der Kommunikationssensor 22 ist über geeignete Zuleitungen mit den Sensoren 12, 14 bzw. 16 oder 18 verbunden. Die aus erfaßten Daten abgeleiteten Signale können von der Kommunikationseinrichtung 24 mittels einer Zuleitung an den Fahrer eines Kraftfahrzeuges und andere Systems des Kraftfahrzeuges weitergeleitet werden. Ein Sensorsystem 10 gemäß dem Stand der Technik ist bedingt durch die Notwendigkeit, die ECU 20 bereitzustellen, nur unter erheblichem Kostenaufwand realisierbar.

Figur 2 zeigt eine bevorzugte Ausführungsform des erfindungsgemäßen Sensorsystem, das insgesamt mit der Bezugsziffer 30 bezeichnet ist und bei dem eine ECU nicht vorhanden ist.

Vergleichbar den Sensoren 12, 14, 16, 18 des Sensorsystems 10 gemäß dem Stand der Technik aus Figur 1 weist das erfindungsgemäße Sensorsystem 30 aus der Figur 2 Sensoren auf, die insbesondere als Slave-Sensoren 32, 34, 36 ausgebildet sind. Diese Slave-Sensoren 32, 34, 36 können je nach Anwendung weitgehend baugleich zu den Sensoren 12, 14, 16, 18 ausgebildet sein und weitgehend identische Funktionen übernehmen.

Bauliche sowie funktionelle Merkmale der ECU 20 des Sensorsystems 10 gemäß dem Stand der Technik weist bei dem erfindungsgemäßen Sensorsystem 30 ein Master-Sensor 38 auf, der Funktion eines herkömmlichen Sensors 12, 14, 16, 18 bzw. Slave-Sensors 32, 34, 36 übernehmen kann. Außerdem ist vorgesehen, daß der Master-Sensor 38 ergänzend Funktionen der ECU 20 übernimmt.

Der Master-Sensor 38 weist einen Kommunikationssensor 40 auf, der als Schnittstelle ausgebildet und über eine geeignete Zuleitung zur Bereitstellung eines Datentransfers zumindest mit dem Slave-Sensor 32 und optional mit den Slave-Sensoren 34, 36 verbunden ist. Zudem weist der Master-Sensor 38 eine Kommunikationseinrichtung 42 auf, über die er mittels einer geeigneten Zuleitung zum Austausch von Daten mit dem Fahrer des Fahrzeuges und mit anderen Systemen des Fahrzeuges verbunden ist.

Bei dem Master-Sensor 38 kann es sich um einen herkömmlichen Sensor handeln, der mit zusätzlichen elektronischen Einrichtungen ausgestattet ist, oder der mit weitgehend herkömmlichen elektronischen Einrichtungen ausgestattet ist, die erfindungsgemäß leistungsfähiger ausgebildet sind, so daß der Master-Sensor 38 des erfindungsgemäßen Sensorsystems 30 die ECU 20 des Sensorsystems 10 gemäß dem Stand der Technik funktionell gleichwertig ersetzen kann. Dabei kann der bereits in einem Sensor zur Signalverarbeitung verwendete Prozessor innerhalb des erfindungsgemäßen Master-Sensors 38 die Funktion des Prozessors der ECU 20 übernehmen.

Anwendungsspezifisch kann vorgesehen sein, daß als Master-Sensor 38 ein weitgehend herkömmlich ausgebildeter Sensor zum Einsatz kommt, der jedoch eine höhere Rechenleistung als ein herkömmlich ausgebildeter Sensor aufweist. Sofern in dem herkömmlichen Sensor nicht vorhanden, kann vorgesehen sein, den Master-Sensor 38 mit einem Prozessor mit vorzugsweise zwei Schnittstellen auszustatten, um somit die Möglichkeit der Kommunikation mit dem Fahrer, anderen Systemen des Fahrzeuges und anderen Sensoren, insbesondere Slave-Sensoren 32, 34, 36, bereitzustellen.

Das erfindungsgemäße Sensorsystem 30 mit dem Master-Sensor 38 weist gegenüber dem Sensorsystem 10 erhebliche Vorteile auf. Aufgrund des Fehlens eines Gehäuses, eines Prozessors, einer Schnittstelle und/oder einer PCB (printed circuit board, gedruckte Leiterplatte) der ECU 20 ergeben sich Möglichkeiten der Einsparung von Kosten und Gewicht gegenüber einem Sensorsystem 10 gemäß dem Stand der Technik. Darüber hinaus kann der Umfang des Kabelbaumes verringert werden.

Ein Stoßfänger-System für ein Kraftfahrzeug, in dem das erfindungsgemäße Sensorsystem 10 angeordnet ist, kann als fertiges, komplettes Modul an die weiterverarbeitende Fahrzeugindustrie geliefert werden. Somit wird der weiterverarbeitenden Fahrzeugindustrie ein in sich geschlossenes Stoßfängersystem angeboten. Herkömmliche Stoßfänger mit einem Sensorsystem 10 gemäß dem Stand der Technik weisen den Nachteil auf, daß eine ECU 20 außerhalb des Stoßfängers angeordnet sein muß.

Das erfindungsgemäße Sensorsystem 30 ist z.B. als Radar-Einparkhilfe, bestehend aus einem Master-Sensor 38 und einer beliebigen Anzahl, typischerweise bis zu neun Slave-Sensoren 32, 34, 36, ausgebildet. Ein entsprechendes Sensor-System 10 gemäß dem Stand der Technik muß zur Bereitstellung derselben sensorischen Funktionen zusätzlich zu der ECU 20 noch wenigstens einen Sensor 12, 14, 16, 18 mehr als das erfindungsgemäße Sensorsystem 30 aufweisen.

## Patentansprüche

1. Elektronisches System mit einer Anzahl von Sensoren (32, 34, 36, 38), bei dem mindestens einer der Sensoren (32, 34, 36, 38) als Master-Sensor (38) ausgebildet ist, der von den Sensoren (32, 34, 36, 38) erfaßte Daten aufnimmt und geeignet weiterverarbeitet.

2. Elektronisches Systems mit einem Master-Sensor (38), der von wenigstens einer weiteren elektronischen Einheit des elektronischen Systems (30) Daten aufnimmt und geeignet weiterverarbeitet.

3. Elektronisches System nach Anspruch 1 oder 2, bei dem der wenigstens eine Master-Sensor (38) zur Steuerung von wenigstens einem Sensor (32, 34, 36, 38) ausgebildet ist.

4. Elektronisches System nach einem der Ansprüche 1 bis 3, bei dem Kommunikationseinrichtungen (40, 42) zum Austausch von Daten zwischen den Sensoren (32, 34, 36, 38) vorgesehen sind.

5. Elektronisches System nach einem der vorstehenden Ansprüche, bei dem der wenigstens eine Master-Sensor (38) wenigstens eine elektronische Einrichtung zur Informationsverarbeitung aufweist.

6. Elektronisches System nach einem der vorstehenden Ansprüche, bei dem der wenigstens eine Master-Sensor (38) wenigstens eine Schnittstelle zur Verbindung der wenigstens einen elektronischen Einrichtung mit einer Kommunikationseinrichtung (40, 42) aufweist.

7. Elektronisches System nach einem der vorstehenden Ansprüche, wobei die wenigstens eine elektronische Einrichtung zwei Schnittstellen zur Verbindung mit Kommunikationseinrichtungen (40, 42) aufweist.

8. Elektronisches System nach einem der vorstehenden Ansprüche, das als mehrkanaliges Verkehrsumfelderkennungssystem, ausgebildet ist.

9. Elektronisches System nach einem der vorstehenden Ansprüche, das als Bestandteil eines Kraftfahrzeuges., insbesondere innerhalb eines Stoßfängersystems eines Kraftfahrzeuges, angeordnet ist.

10. Sensor, insbesondere zur Verwendung innerhalb eines Systems nach einem der vorstehenden Ansprüche, der derart ausgebildet ist, daß dieser von weiteren Sensoren (32, 34, 36) erfaßte Daten aufnimmt und geeignet weiterverarbeitet.

11. Verfahren zur Steuerung eines elektronischen Systems (30) mit einer Anzahl von Sensoren (32, 34, 36, 38), bei dem einer der Sensoren (32, 34, 36, 38) als Master-Sensor (38) ausgebildet ist und von den Sensoren (32, 34, 36, 38) erfaßte Daten aufnimmt und geeignet weiterverarbeitet.
